Europäisches Patentamt

European Patent Office

Office européen des brevets

(11) Numéro de publication: **0 059 116**
**B1**

(12) **FASCICULE DE BREVET EUROPEEN**

(45) Date de publication du fascicule du brevet: **29.05.85**

(51) Int. Cl.⁴: **G 01 B 5/00**, G 01 B 5/20

(21) Numéro de dépôt: **82400106.9**

(22) Date de dépôt: **20.01.82**

(54) **Procédé de mesure des déformations dues à des chocs subis par un véhicule automobile accidenté et appareil pour sa mise en oeuvre.**

(30) Priorité: **23.02.81 FR 8103515**

(43) Date de publication de la demande:
**01.09.82 Bulletin 82/35**

(45) Mention de la délivrance du brevet:
**29.05.85 Bulletin 85/22**

(84) Etats contractants désignés:
**AT BE CH DE GB IT LI LU NL SE**

(56) Documents cités:
**WO-A-80/01001**
**FR-A-2 436 046**
**US-A-2 901 022**
**US-A-3 188 741**

(73) Titulaire: **GARAGES MUTUALISTES FRANCAIS
Société Anonyme dite:
58 rue Roger Salengro Péripole 121
F-94126 Fontenay-sous-Bois (FR)**

(72) Inventeur: **Schermann, Maurice
Route de Cressy
F-77136 Tigeaux (FR)**

(74) Mandataire: **Loyer, Jean Marius Louis et al
Cabinet Dupuy & Loyer 14, rue La Fayette
F-75009 Paris (FR)**

Courier Press, Leamington Spa, England.

EP 0 059 116 B1

## Description

La présente invention se rapporte à un procédé de mesure des déformations dues à des chocs subis par um véhicule automobile accidenté. Un tel procédé qui correspond au préambule de la revendication 1 est en soi connue du brevet WO—A—80/01001.

L'invention a également pous objet un appareil pour la mise en oeuvre de ce procédé.

A l'heure actuelle, l'estimation du coût d'une réparation d'un véhicule automobile accidenté repose essentiellement sur les barèmes de temps, qui sont le fruit des services après vente des constructeurs, basés sur des opérations de remplacement (FR—A—2 436 046).

Les opérations de remise en état telles que les opérations de redressage ou de planage de pièces de carrosserie ne sont pas chiffrées (US—A—2 901 022, WO—A—80101001, US—A—3 188 741).

Pour établir un temps de réparation on doit actuellement additionner plusieurs temps dont la précision est médiocre de sorte que la fixation du temps global présente un facteur arbitraire important.

Une autre solution consiste à attendre la fin des opérations de remise en état pour connaître le temps qu'a nécessité cette opération.

Or le nombre sans cesse croissant d'interventions sur les véhicules automobiles rendu nécessaire par l'accroissement du parc automobile et du nombre d'accidents, rend nécessaire de disposer de moyens efficaces et précis pour déterminer le temps requis pour une réparation.

Cette nécessité se fait particulièrement sentir dans le domaine de la réparation des carrosseries, impliquant, dans la plupart des cas, l'intervention d'un expert en matière d'assurances, qui ne peut généralement consacrer qu'un temps très faible à chaque véhicule accidenté et qui a donc besoin de disposer de moyens d'estimation du temps de réparation fiables, rapides et précis.

L'invention vise donc à créer un procédé de mesure des déformations dues à des chocs subis par un véhicule automobile, accidenté qui facilite et accélère la mesure.

Ce but est atteint en se servant du procédé selon la revendication 1.

L'invention a également pour objet un appareil de mesure selon la revendication 2 destiné à la mise en oeuvre du procédé ci-dessus mentionne.

D'autres caractéristiques techniques d'une forme d'execution de l'invention apparaîtront au cours de la description qui va suivre.

Aux dessins annexés, donnés uniquement à titre d'exemple:

— la figure 1 est une vue schématique, en plan d'un véhicule automobile subdivisé en zones servant à la codification de l'emplacement d'un choc reçu par la carrosserie du véhicule.
— la figure 2 est une vue schématique partielle, en élévation du véhicule de la figure 1 subdivisé en différents niveaux, servant également à la codification de l'emplacement de chocs;
— la figure 3 est une vue schématique correspondant à la figure 2 mais sur laquelle est portée une graduation de mesure des déformations pouvant être subies par le véhicule recevant un choc à l'avant;
— la figure 4 est une vue partielle de côté portant des graduations de mesure des déformations pouvant être subies par un véhicule recevant un choc latéral.
— la figure 5 est une vue générale d'un tableau de codification séquentielle cumulative des pièces entrant dans la construction d'un certain nombre de types de véhicules automobiles;
— la figure 6 est une vue à plus grande échelle, d'un secteur du tableau de codification de la figure 5;
— la figure 7 montre en perspective un appareil utilisé pour la mise en oeuvre du procédé de l'invention.
— la figure 8 est une vue en perspective d'un détail de l'appareil de la figure 7.

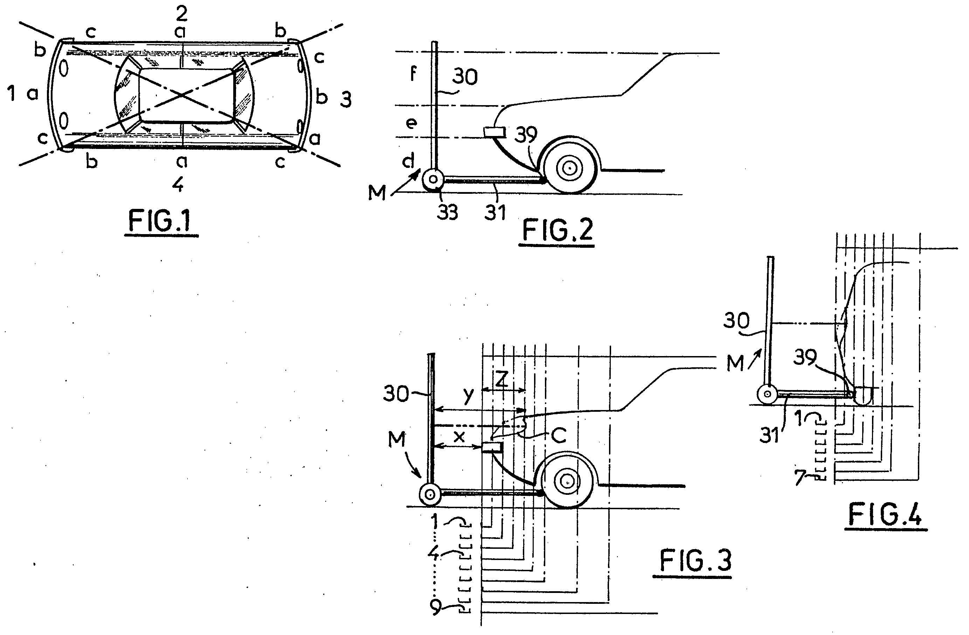

Le véhicule représenté schématiquement à la figure 1 est subdivisé en quatre zônes correspondant à des emplacements de chocs subis par le véhicule:

— la zône 1 est la zône des chocs à l'avant du véhicule;
— la zone 2 correspond au côté droit du véhicule;
— la zone 3 correspond à l'arrière du véhicule;
— la zone 4 correspond au côté gauche.

Le numéro de chacune des zônes précitées entre dans la composition d'un numéro de code d'identification de la réparation à effectuer.

Ce code est constitué comme suit:
Il comporte de gauche à droite:

— une zone à deux positions et une zone à trois positions d'identification de la marque et du type du véhicule;
— une zône à une position d'identification de la zône de choc ou de remise en état;
— une zône à quatre positions de pièces à remplacer;
— une zône à quatre positions de pièces à redresser ou à réparer;
— une zône à trois positions de détermination du degré d'enfoncement;
— une zône à une position relative à la nature de la réparation.

Dans le cas de l'évaluation de la remise en état d'une portion de carrosserie, la zône des pièces à remplacer et des pièces à redresser est définie comme suit.

Afin d'indiquer que l'opération à assurer ne nécessite que des remplacements de pièces, des zéros occupent toutes les positions de la zône des pièces à redresser.

Afin d'indiquer que l'opération à assurer ne nécessite que des redressements de pièces, des zéros occupent toutes les positions de la zône des pièces à remplacer.

Afin d'indiquer que l'opération à assurer nécessite à la fois des redressements et des remplacements de pièces, des chiffres, autres que des zéros, occupent des positions de la zône des pièces à redresser et de la zône des pièces à remplacer.

Dans le cas de l'évaluation d'une remise en état d'une partie mécanique, la zône des pièces à remplacer et des pièces à réparer, est définie de la manière indiquée ci-dessus pour la carrosserie, les données relatives aux pièces à réparer étant substituées à celles relatives aux pièces à redresser.

Chacune des zônes 1 à 4 de la carrosserie est à son tour divisée en trois régions: a, b, c; une région centrale à laquelle on affecte le code 0, deux régions situées de part et d'autre de la région centrale et auxquelles on affecte respectivement des codes 1 et 2.

Ainsi que le montre la figure 2, le véhicule est, en outre, divisé en trois zônes: d, e, f suivant sa hauteur, des codes 1, 2 et 3 étant respectivement affectés à ces trois zônes.

Cette division en hauteur est par exemple la suivante:

— la zône d concerne les organes se trouvant sous les pare-chocs;
— la zône e concerne les pièces situées entre les par-chocs et les parties inférieures des surfaces vitrées;
— la zône f concerne les pièces situées au-dessus des zônes précédentes.

Un tel découpage de la carrosserie du véhicule permet d'assurer le codage de l'enfoncement en remplissant la zône à trois positions précitée.

Ce codage est réalisé comme suit:

La première position à partir de la droite de la zône à trois positions reçoit un chiffre indiquant le degré de l'enfoncement provoqué par le choc. Ce degré est déterminé par des chiffres la 1 à 9 de la graduation de mesure de la figure 3 ou de la figure 4, en fonction des indications d'un appareil de mesure M placé en contact avec la carrosserie dans la région du choc subi par celle-ci.

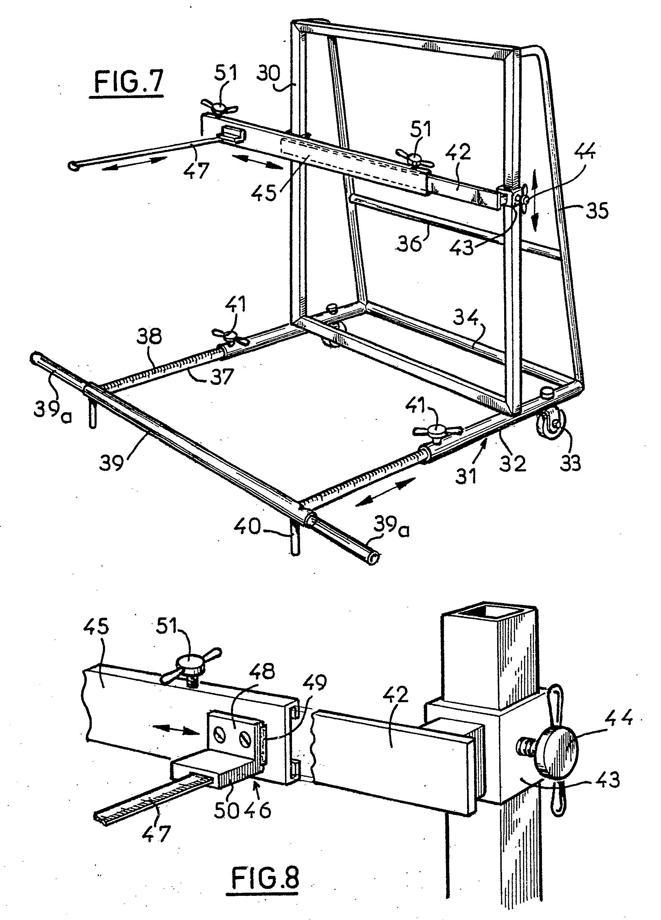

Cet appareil M est représenté aux figures 7 et 8 et sera décrit par la suite.

La seconde position de la zône à trois positions précise la situation du choc dans l'une des zônes 1 à 4 considérées.

Comme indiqué à la figure 1, le chiffre placé dans cette seconde position a l'une des valeurs 0, 1 ou 2, selon que le choc est localisé dans la région a, b ou c de la zône considérée.

Enfin, la troisième position de la zône à trois positions est occupée par un chiffre d'une valeur égale à 1, 2 ou 3 selon que le choc est localisé à une hauteur comprise dans la zône d, e ou f.

Le code ainsi constitué donne, par conséquent, une information complète sur l'emplacement précis du choc et sur son intensité.

Enfin, la zône à une position est destinée à recevoir un code de nature, représentant une remise en état en atelier de tôlerie ou en atelier de peinture.

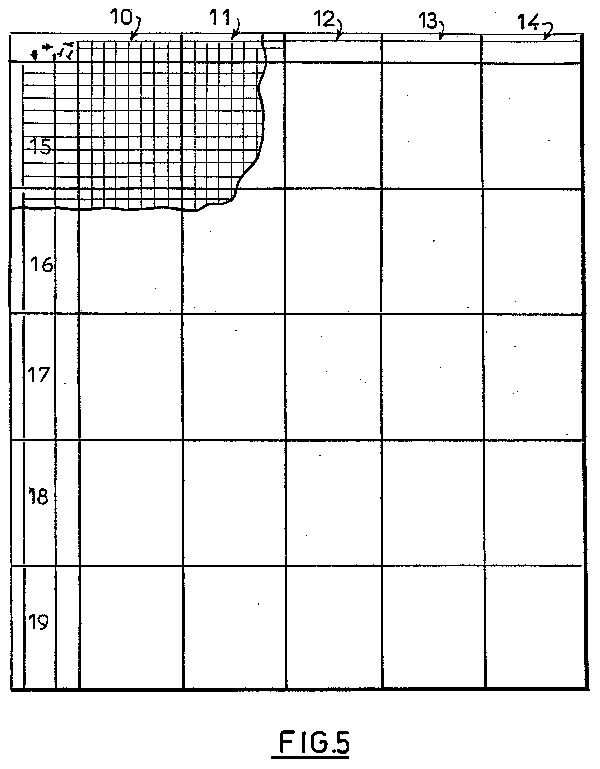

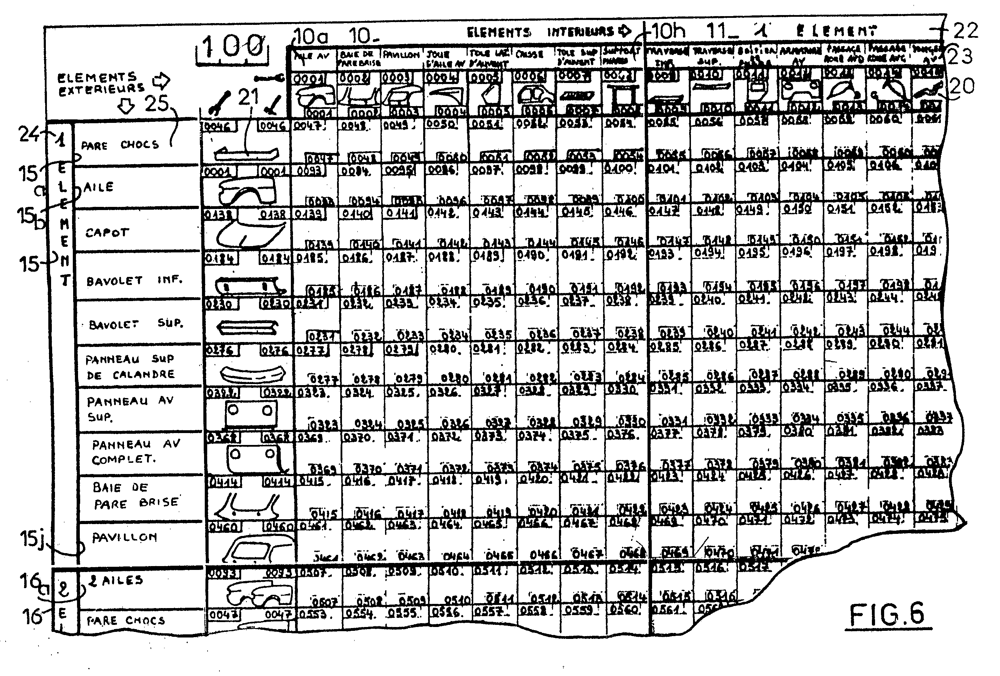

L'affectation des codes aux divers cas que l'on rencontre lors de la réparation de véhicules automobiles va maintenant être décrite en référence aux figures 5 et 6.

Le tableau représenté à la figure 5 est établi selon la méthode dite séquentielle cumulative.

Ce tableau correspond à la zône 1 du véhicule représenté à la figure 1. Il contient les désignations des pièces qui se trouvent dans cette zône et qui appartiennent à des véhicules automobiles de tous types.

Il comporte en partant de la gauche une grande colonne 10 de codes relatifs à des éléments extérieurs de la carrosserie et quatre grandes colonnes 11, 12, 13, 14 groupant des codes relatifs respectivement à un, deux, trois et quatre éléments intérieurs de l'ensemble de véhicules considéré.

Chacune des grandes colonnes 10 à 14 est subdivisée en colonnes élémentaires désignant chacune un élément ou un groupe d'éléments.

C'est ainsi que, comme le montre la figure 6, la grande colonne 10, qui concerne des éléments extérieurs, est subdivisée en colonnes élémentaires 10a à 10h relatives chacune à des codes donnés aux pièces suivantes.

| Colonne élémentaire | Elément |
|---|---|
| 10a | Aile avant |
| 10b | baie de pare-brise |
| 10c | pavillon |
| 10d | joue d'aile avant |
| 10e | tôle latérale d'auvent |
| 10f | caisse |
| 10g | tôle supérieure d'auvent |
| 10h | support de projecteur |

Les codes se trouvant dans chacune de ces colonnes élémentaires correspondent respectivement aux diverses combinaisons de l'une des pièces indiquées ci-dessus, avec d'autres pièces dont les codes sont disposés en rangées et qui vont être décrits plus loin.

Les autres grandes colonnes 11 à 14 relatives à des éléments ou à des groupes d'éléments intérieurs sont de la même façon subdivisées en colonnes élémentaires.

Le tableau de la figure 5 est en outre subdivisé en cinq rangées 15 à 19 relatives à un, deux, trois, quatre et cinq éléments extérieurs de la carrosserie.

Chacune de ces rangées 15 à 19 est subdivisée en lignes relatives à un élément ou à un groupe d'éléments particulier.

Par exemple, la rangée 15 est subdivisée en lignes 15a à 15j correspondant chacune à l'un des éléments suivants.

| Ligne | Element |
| --- | --- |
| 15a | pare-chocs |
| 15b | aile |
| 15c | capot |
| 15d | bavolet inférieur |
| 15e | bavolet supérieur |
| 15f | panneau supérieur de calandre |
| 15g | panneau avant supérieur |
| 15h | panneau avant complet |
| 15i | baie de pare-brise |
| 15j | pavillon. |

Dans chacune des cases définies par l'intersection d'une colonne élémentaire et d'une ligne sont placés deux codes identiques mais dont les positions correspondent respectivement à une opération de remplacement et à une opération de réparation de la pièce ou du groupe de pièces correspondant.

La disposition des codes est visible sur la figure 6 à laquelle on va se référer maintenant.

Dans le présent exemple, les codes sont affectés successivement de gauche à droite, à partir de la première ligne. Ce sont des codes décimaux qui peuvent être lus aisément par l'utilisateur.

Les cases supérieures de toutes les colonnes élémentaires du tableau ainsi que les cases de gauche de toutes les lignes de celui-ci forment en outre respectivement une ligne 20 et une colonne 21 supplémentaires qui, tout en faisant partie intégrante du tableau, comportent en outre les représentations figuratives des éléments et groupes d'éléments correspondants dudit tableau.

Le tableau représenté aux figures 5 et 6 comporte en outre des lignes et des colonnes marginales 22, 23, 24, 25 dans lesquelles figurent des indications relatives au nombre d'éléments ainsi qu'à la nature de ces éléments ou groupes d'éléments.

Le tableau représenté schématiquement à la figure 5 comporte quarante cinq colonnes élémentaires, ce qui correspond à une périodicité théorique de quarante cinq numéros de code par ligne.

On constate toutefois que cette périodicité n'est pas respectée lorsque deux éléments ou groupes d'éléments identiques se retrouvent sur une colonne élémentaire et sur une ligne.

Tel est le cas par exemple, pour les ailes avant d'un véhicule.

En effet, on peut se trouver en présence d'un choc ayant touché soit une aile soit les deux.

C'est ainsi que le même code 0001 est affecté à l'aile figurant dans la colonne élémentaire 10a et à celle se trouvant dans la ligne 15b.

Lorsque les deux ailes avant sont endommagées, ces ailes forment un groupe de deux éléments à redresser ou à remplacer. Il y a donc lieu d'affecter un code particulier à ce groupe.

Le code affecté au croisement de la colonne élémentaire 10a avec la ligne 15b est 0093.

C'est donc ce code qui est affecté au groupement de deux ailes que l'on retrouve à la ligne 16a de la rangée 16.

Un tel processus d'affectation de codes à des groupes d'éléments formés d'éléments ayant déjà reçu des numéros de code qui leur sont propres, implique donc de déroger, chaque fois que cela est nécessaire, à la règle de périodicité indiquée plus haut.

Des tableaux correspondants pour les zônes 2 ou 4 et 3 de la représentation de la figure 1 sont établis selon le même processus que le tableau des figures 5 et 6.

Dans le présent exemple, les tableaux tels que ceux des figures 5 et 6 sont des tableaux de type universel conçus pour un grand nombre de véhicules.

On comprendra toutefois qu'il est possible de réaliser:

— des séries de tableaux particuliers à une marque de voiture,
— des séries de tableaux pour un type de voiture, ou
— des séries de tableaux pour un modèle dans un type de voiture.

Par ailleurs, des tableaux analogues sont également établis pour les opérations de réparation mécanique.

Au jeu de tableaux établis de la manière indiquée ci-dessus, est en outre associé un cahier des temps, dans lequel sont consignées les durées des réparations correspondant aux divers codes incident formés à partir des diverses informations d'emplacement et d'intensité du choc et de nature des pièces endommagées.

Ces durées ont été établies expérimentalement à partir de données recueillies sur les fiches d'atelier rendant compte de réparations effectuées sur des véhicules identiques à ceux pour lesquels on doit fournir une estimation.

Pour chaque cas, on établit un temps moyen qui résulte de l'addition d'un certain nombre de temps qu'il a fallu pour effectuer une réparation donnée et de la division de cette somme par ce nombre. On relève également les trois temps les plus courts et les trois temps les plus longs, ce qui permet de donner une indication moyenne tenant compte:

— d'un temps moyen global pour une voiture en bon état général;

— d'un temps moyen plus court pour une voiture ayant un faible kilomètrage, bien entretenue et dont l'âge est compris entre un et deux ans;

— d'un temps moyens plus long pour une voiture ayant un fort kilomètrage et dont l'âge est supérieur à cinq ans.

Le cahier des temps ainsi constitué, peut être porté par des microfiches.

Ces microfiches reprennent bien entendu l'ensemble des codes incidents établis de la manière indiquée plus haut ainsi que les temps de remise en état correspondants.

Elles portent également la liste des pièces qui doivent être éventuellement remplacées.

Outre ces informations indispensables, les microfiches peuvent également porter:

— le prix de l'ensemble des pièces
— le prix de la remise en état avec peinture
— le prix total de l'opération de remise en état avec les fongibles incorporés.

Ces informations sont mises à jour deux fois par an. L'accès à l'ensemble des informations portées par les microfiches est assuré par un écran de visualisation commandé par un clavier.

L'universalité du procédé de l'invention réside dans le fait que la nomenclature des pièces est établie à l'aide d'une numérotation des pièces qui est la même pour une pièce donnée quelle que soit la marque de véhicule auquel elle appartient.

Pour reprendre l'exemple de l'aile, celle-ci porte toujours le code 0001.

Ceci permet d'effectuer plus facilement des tris, en vue de l'établissement de statistiques. Par ailleurs, l'utilisateur peut se familiariser rapidement avec les numéros des pièces.

L'établissement du code d'enfoncement est assuré au moyen de l'appareil représenté aux figures 7 et 8 et qui va maintenant être décrit.

Cet appareil comprend un cadre vertical 30 fixé sur un chariot 31 formé de deux longerons tubulaires 32 portant chacun une roue 33 et d'une traverse 34 réunissant les deux longerons à une de leurs extrémités.

Le cadre vertical 30 est maintenu sur le chariot à l'aide d'une ossature de renforcement 35 qui comporte à mi-hauteur, une barre transversale 36 pour la manoeuvre de l'appareil.

Dans les extrémités des longerons 32 opposées à la traverse 34 sont montées à coulissement des barres 37 portant des graduations 38 suivant leur longueur et reliées à une barre transversale 39 destinée à prendre appui contre un pneumatique d'un véhicule de la façon représentée aux figures 2 à 4. Dans la zône de jonction de chacune des barres 37 et de la barre 39 correspondante est fixé en pied 40.

Chacun des longerons 32 comporte à son extrémité opposée à la roue 33 un organe 41 de blocage en translation de la barre 37 correspondante. Cet organe est avantageusement constitué par une vis pourvue d'une tête à oreilles pour en faciliter la manoeuvre.

Sur les montants du cadre vertical 30 est montée, règlable en hauteur, une barre transversale plate 42 portant à ses extrémités des supports 43 montés à coulissement sur les montants du cadre 30 et pourvus, eux aussi, de moyens de blocage en translation constitués par des vis à oreilles 44.

Sur la barre plate 42 formant glissière, disposée sur ses supports 43 en avant du plan formé par le cadre 30, est monté à coulissement un panneau 45 de forme allongée, constitué d'une cornière en C dont les bords rabattus vers l'intérieur assurent le maintien du panneau sur la barre 42.

Ce panneau est réalisé en matériau magnétique, par exemple en fer.

Il est destiné à assurer le positionnement tant horizontal que vertical d'un support magnétique 46 auquel est assujetti un mètre à ruban métallique 47, destiné à assurer la mesure du vecteur de déformation.

Le support magnétique 46 est constitué d'un élément de fixation 48 qui porte sur une de ses faces un aimant 49, destiné à être appliqué contre la face du panneau 45, et sur la face opposée de l'élément de fixation 48 est fixé le boîtier 50 du mètre à ruban.

Dans le mode de réalisation représenté, la longueur du panneau 45 est égale à la largeur du cadre 30, de sorte qu'en faisant coulisser ce panneau sur la barre plate 42, vers la gauche ou vers la droite, on peut placer une partie de ce panneau hors des limites du cadre 30 et assurer ainsi le positionnement de l'élément de mesure formé par le metre métallique 47, d'un côté de l'appareil ou de l'autre lorsque la position du choc, par exemple un choc latéral, ne peut être atteinte en disposant l'élément de mesure entre les montants du cadre 30.

Une telle situation peut se produire compte tenu du fait que, pour effectuer une évaluation correcte on doit toujours appliquer les butées 39 de l'appareil contre au moins une roue du véhicule considéré.

Afin d'assurer l'immobilisation du panneau 45 celui-ci est muni de vis de blocage 51 disposées à ses extrémités et destinées à coopérer lors de leur serrage avec la barre 42.

On va maintenant donner un exemple de codage réalisé selon le procédé et à l'aide de l'appareillage de l'invention.

On va supposer que le choc a eu lieu dans la zône 1 c'est-à-dire à l'avant du véhicule représenté à la figure 1.

On place alors l'appareil M de la figure 7 dans la position représentée à la figure 3 de façon que les barres de butée 39 soient appliquées contre les roues avant du véhicule.

Il est clair que la distance entre l'extrémité avant du capot du véhicule et le bord antérieur de ses roues avant dépend de la marque et du type du véhicule.

Pour un règlage déterminé de la position des barres graduées 37 par rapport aux longerons 32, cette distance peut être rapportée à la distance x entre le cadre vertical 30 de l'appareil de mesure et l'extrémité du capot.

Il est aisé de dresser des tableaux des valeurs de la distance x précitée ainsi que des valeurs de distances correspondantes de l'arrière ou du côté d'un véhicule par rapport au cadre vertical 30 de l'appareil, par exemple pour tous les types de véhicules d'une marque donnée.

Après avoir disposé l'appareil de mesure M de la façon indiquée plus haut on règle la position en hauteur de la barre plate 42 sur les montants du cadre vertical.

Dans le présent exemple, si l'on se réfère aux figures 2 et 3, le choc s'est produit dans la zône e à laquelle est affecté le code numérique 2.

On place alors le support 48, 49 du mètre métallique 47 en face de la zône de choc c du véhicule de façon que l'aimant 49 fasse adhérer le support au panneau allongé 45, ce qui permet de déterminer avec plus de précision l'emplacement horizontal du choc. Dans le présent exemple on supposera que le choc s'est produit dans la région c de la zône 1. On lui affecte donc le code 2.

On déroule alors le mètre 47 jusqu'à ce que son extrémité touche le fond de la déformation de la carrosserie du véhicule dans la zône du choc c, de façon à obtenir la distance y entre le plan du cadre 30 de l'appareil et le fond de la zône de choc.

La différence $Z = y - x$ donne la profondeur du choc à laquelle on affecte un code numérique compris entre 1 et 9.

Dans l'exemple de la figure 3, ce code est 4.

La zône de détermination du degré d'enfoncement à trois positions du code d'évaluation contiendra donc le nombre /224/.

Ensuite, on détermine le nombre de pièces de la carrosserie à remplacer ou à redresser.

Dans l'exemple de la figure 3 on peut supposer que l'aile avant gauche doit être remplacée alors que le capot peut être redressé.

On se reporte alors au tableau de la figure 6 sur lequel on voit que le code affecté à une aile est 0001 tandis que celui affecté au capot est 0138. On reporte alors le nombre 0001 dans la zône à quatre positions des pièces à remplacer et le nombre 0138 dans la zône à quatre positions des pièces à redresser ou à réparer.

Le code d'évaluation devient alors:

/0001/0138/224/

Il comporte en outre dans le présent exemple le chiffre 1 indiquant la zône de choc et devient:

/1/0001/0138/224/

Il est complété du côté gauche par un code à deux chiffres indiquant la marque, et un code à trois chiffres indiquant le type du véhicule et, du côté droit, par un code à un chiffre indiquant la nature de la réparation. On peut donner respectivement à ces divers codes les valeurs arbitraires suivantes: 37,510 et 8.

On aboutit donc à un code complet:

/37/510/1/0001/0138/224/8/

Le code ainsi obtenu est traité de la manière indiquée plus haut, pour aboutir à une estimation du temps de réparation du véhicule.

Dans ce qui précède on a indiqué que les temps de réparation et les codes incidents correspondants peuvent être consignés sur des microfiches ou des cahiers des temps. Ces recueils d'informations qui peuvent d'ailleurs prendre les formes les plus diverses y compris celles d'une mémoire permanante d'un ensemble électronique de calcul, peuvent grouper des informations relatives à l'ensemble des véhicules d'une ou plusieurs marques, ou bien à un ou plusieurs véhicules d'une seule marque.

L'ampleur et le nombre de ces recueils doivent être adaptés à l'importance de l'entreprise qui les utilise.

Bien que dans le mode de réalisation représenté à la figure 7, l'appareil de mesure M comprenne comme moyens de positionnement horizontal et vertical du mètre métallique 47, une barre plate 42 réglable en hauteur sur les montants du cadre 30 et sur laquelle est monté à coulissement un panneau allongé 45 destiné à recevoir le support 48 à aimant 49 pour le mètre 47, on comprendra qu'il est possible de concevoir d'autres modes de réalisation de ces moyens de positionnement.

On peut par exemple disposer sur le cadre, un panneau métallique occupant toute sa surface et pouvant coulisser sur une distance donnée de part et d'autre des montants du cadre 30.

Dans un tel cas, il suffirait simplement de placer l'aimant 49 du support en face de l'emplacement du choc sans effectuer de réglage préalable des moyens de positionnement.

## Revendications

1. Procédé de mesure des déformations dues à des chocs subis par un véhicule automobile accidenté, mettant en oeuvre des moyens pour apprécier la détérioration, caractérisé en ce que l'on apprécie ladite détéioration en fonction du degré de l'enfoncement ainsi que la nature et le nombre de pièces endommagées, en ce que l'on utilise un appareil à positionnement vertical et horizontal variable ledit appareil comportant un cadre vertical (30) et un ensemble de support (31, 34, 35, 37, 39) dudit cadre destiné à le placer à une distance prédéterminée d'au moins l'un des pneumatiques du véhicule se trouvant à proximité du choc à évaluer et des moyens (42, 43, 45) de positionnement vertical et horizontal dans le plan dudit cadre (30), en regard de l'emplacement du choc (C) d'un élément (47) de mesure du degré d'enfoncement de la carrosserie du véhicule; en ce que l'on détermine et relève à l'aide de cet appareil sur une première face du véhicule, pour la partie latérale, la hauteur et le degré de l'enfoncement dû au choc subi, ainsi que sa position par rapport à l'axe médian de l'empattement; en ce que l'on détermine et relève à l'aide du même appareil sur une seconde face du véhicule, les mêmes données, afin d'en déterminer les différences; en ce que l'on utilise le même appareil à positionnement vertical et horizontal, pour déterminer et relever à l'aide de cet appareil, la hauteur et le degré d'enfoncement du choc subi par la parti avant ou arrière, ainsi que sa position par rapport à l'axe médian du véhicule, afin que par comparaison avec des cotes d'origine du même type de véhicule neuf qui ont été relevées à l'aide dudit appareil, on évalue la situation géographique du choc et sa profondeur, et qu'ainsi, le degré du vecteur de pénétration soit déterminé.

2. Appareil pour la mise en oeuvre du procédé de mesure suivant la revendication 1, caractérisé en ce que ledit appareil de positionnement comporte une barre plate (42) supportée à ses extrémités par des supports (43) réglables en hauteur, montés à coulissement sur les montants du cadre vertical (30), un panneau métallique allongé en matériau magnétique (45) étant monté à coulissement sur ladite barre plate (42) et étant pourvu de moyens d'immobilisation (M), tandis que l'élément de mesure du degré d'enfoncement est constitué par un mètre métallique (47) dont le boîtier (50) est solidaire d'un support (48) fixé à un aimant (49) appliqué contre ledit panneau allongé (45) en regard de l'emplacement du choc (C).

3. Appareil de mesure suivant la revendication 2, caractérisé en ce que l'ensemble du support du cadre vertical (30) est constitué par un chariot (31) comportant deux longerons creux (32) dans lesquels sont montés à coulissement des barres (37) portant des graduations (38) et réglables en position par des moyens d'immobilisation (41), ces barres graduées étant reliées à leur extrémité libre à une barre de butée transversale (39) destinée à être appliquée contre une surface de référence du véhicule.

## Patentansprüche

1. Verfahren zur Messung von Deformationen, die von Stößen an einem Unfall-Automobilfahrzeug herrühren, unter Verwendung von Mitteln zum Beurteilen der Beschädigung, dadurch gekennzeichnet, daß man die Beschädigung als Funktion des Eindrückungsgrades sowie der Art und der Anzahl der beschädigten Teile beurteilt, daß man einen Apparat zum variablen vertikalen und horizontalen Positionieren verwendet, wobei der Apparat umfaßt einen vertikalen Rahmen (30) und eine Gruppe von Trägern (31, 34, 35, 37, 39), wobei der Rahmen bestimmt ist, ihn in einer vorbestimmten Entfernung von wenigstens einem der Reifen des Fahrzeuges zu plazieren, der sich in Nähe des zu bewertenden Stoßes befindet, und Mittel (42, 43, 45) zum vertikalen und horizontalen Positionieren eines Elementes (47) zum Messen des Eindrückungsgrades der Fahrzeugkarosserie in der Ebene des Rahmens (30) in Bezug auf die Lage des Stoßes (C), daß man mit Hilfe dieses Rahmens auf einer ersten Seite des Fahrzeuges für die Seitenpartie die Höhe und den Grad der dazugehörenden Eindrückung des eingetretenen Stoßes sowie dessen Lage in Bezug auf die Mittelachse des Radstandes bestimmt und aufnimmt, daß man mit Hilfe desselben Apparates auf einer zweiten Seite des Fahrzeuges dieselben gegebenen Tatsachen bestimmt und aufnimmt, um die Unterschiede festzustellen, und daß man denselben Apparat zum vertikalen und horizontalen Positionieren verwendet, um mit Hilfe dieses Apparates die Höhe und den Eindrückungsgrad des eingetretenen Stoßes an der Partie vorher und nachher sowie seine Lage in Bezug auf die Mittelachse des Fahrzeuges zu bestimmen und aufzunehmen, um im Vergleich mit den Originalseiten eines neuen Fahrzeuges desselben Typs, welche Seiten mit Hilfe desselben Apparates aufgenommen worden sind, die geographische Lage des Stoßes und seine Tiefe zu bewerten sowie den Grad des Eindringungsvektors zu bestimmen.

2. Apparat zur Anwendung des Meßverfahrens nach Anspruch 1, dadurch gekennzeichnet, daß der Apparat zum Positionieren eine flache Schiene (42), die an ihren Enden an in der Höhe einstellbaren, verschiebbar an Pfosten des vertikalen Rahmens (30) montierten Organen (43) befestigt ist, eine verlängerte, verschiebbar auf der flachen Schiene (42) montierte metallische Abdeckung (45) aus magnetischem Material aufweist und mit Feststellmitteln (M) versehen ist, während das Element zum Messen des Eindrückungsgrades aus einem metallischen Metermaß (47) gebildet ist, dessen Gehäuse (50) an einer Stütze (48) befestigt ist, die an einem Magnet (49) angebracht ist, der hinsichtlich der Lage des Stoßes (C) an der verlängerten Abdeckung (45) angewendet wird.

3. Apparat zum Messen nach Anspruch 2, dadurch gekennzeichnet, daß die Trägergruppe des vertikalen Rahmens (30) aus einem Wagen (31) gebildet ist, der zwei hohle Träger (32) umfaßt, in welchen verschiebbare Träger (37) montiert sind, die Maßeinteilungen (38) tragen und durch Feststellmittel (41) in der Position einstellbar sind, und daß die Träger mit den Maßeinteilungen an ihrem freien Ende mit einer querverlaufenden Anschlagstange (39) verbunden sind, die zum Anlegen an einer Bezugsfläche des Fahrzeuges bestimmt ist.

## Claims

1. Method for measuring the deformations due to the impact sustained by a damaged motor vehicle, using means for assessing the damage, characterised in that the said damage is assessed in accordance with the degree of indentation as well as the nature and number of damaged parts, in that an apparatus for variable vertical and horizontal positioning is used, the said apparatus comprising a vertical frame (30) and an assembly (31, 34, 35, 37, 39) for supporting the said frame intended to place it at a predetermined distance from at least one of the tyres of the vehicle located in the vicinity of the impact to be assessed and means (42, 43, 45) for vertically and horizontally positioning in the plane of the said frame (30), opposite the position of the impact (C), an element (47) for measuring the degree of indentation of the vehicle's bodywork, in that this apparatus is used to determine and record on a first surface of the vehicle, as regards the lateral part, the height and degree of indentation due to the impact sustained, as well as its position in relation to the median axis of the wheel base, in that the same apparatus is used to determine and record on a second surface of the vehicle, the same data, so as to determine the differences therein, in that the same apparatus for vertical and horizontal positioning is used to determine and record, by means of this apparatus (sic), the height and degree of indentation of the impact sustained by the front or rear part, as well as its position in relation to the median axis of the vehicle, so that, by comparison with the original dimensions of the same type of vehicle when new, recorded using the said apparatus, the geographic the original dimensions of a new vehicle of the same type, recorded using the said apparatus, the geographic location of the impact and its depth can be assessed, and so that, as a result, the degree of the penetration vector can be determined.

2. Apparatus for implementing the measuring method according to Claim 1, characterised in that the said positioning apparatus has a flat bar (42) supported at its ends by supports (43) whose height can be adjusted and which are mounted in sliding fashion on the uprights of the vertical frame (30), an elongated metal panel (45) made of magnetic material being mounted in sliding fashion on the said flat bar (42) and being provided with fixing means (M), whereas the element for measuring the degree of indentation consists of a metal rule (47), the casing (50) of which is integral with a support (48) fixed to a magnet (49) applied against the said elongated panel (45) opposite the position of the impact (C).

3. Measuring apparatus according to Claim 2, characterised in that the assembly for supporting the vertical frame (30) consists of a trolley (31) comprising two hollow longitudinal members (32) inside which bars (37) with graduations (38) are mounted in sliding fashion, these graduated bars being adjustable, with regard to position, by fixing means (41) and being connected at their free end to a transverse stop bar (39) intended to be applied against a reference surface of the vehicle.

FIG.1

FIG.2

FIG.3

FIG.4

1

FIG.5

FIG.6

ELEMENTS INTERIEURS

ELEMENTS EXTERIEURS

| | PARE CHOCS | AILE | CAPOT | BAVOLET INF. | BAVOLET SUP. | PANNEAU SUP DE CALANDRE | PANNEAU AV SUP. | PANNEAU AV COMPLET. | BAIE DE PARE BRISE | PAVILLON | 2 AILES | PARE CHOCS |

FIG.7

FIG.8

4